# EUROPÄISCHE PATENTSCHRIFT

(11) **EP 3 382 180 B1**
(45) Veröffentlichungstag und Bekanntmachung des Hinweises auf die Patenterteilung: **07.10.2020**
(21) Anmeldenummer: 18163248.0
(22) Anmeldetag: 22.03.2018
(51) Int. Cl.: F02C 7/06

(54) **STRAHLTRIEBWERK MIT EINER KAMMER**
JET ENGINE WITH A CHAMBER
MOTEUR À RÉACTION POURVU D'UNE CHAMBRE

(30) Priorität: 28.03.2017 DE 102017106664
(43) Veröffentlichungstag der Anmeldung: 03.10.2018
(73) Patentinhaber: Rolls-Royce Deutschland Ltd & Co KG, 15827 Blankenfelde-Mahlow (DE)
(72) Erfinder: Schwengler, Jonas, 15827 Blankenfelde-Mahlow (DE); Klaus, Christoph, 15827 Blankenfelde-Mahlow (DE)

(56) Entgegenhaltungen:
- US-A1- 2009 250 296
- US-A1- 2014 155 213
- US-A1- 2015 007 531

## Beschreibung

Die Erfindung betrifft ein Strahltriebwerk mit einer zumindest bereichsweise von einem feststehenden Wandungsbereich begrenzten Kammer.

Ein aus der Praxis bekanntes Strahltriebwerk weist unter anderem Bereiche bzw. Kammern, in den unter anderem Lagereinrichtungen, verschiedene Maschinenelemente, wie Zahnräder, Keilverzahnungen und dergleichen angeordnet sind. Die Lagereinrichtungen und Maschinenelemente werden im Betrieb des Strahltriebwerkes zur Kühlung und Schmierung beispielsweise über Öldüsen oder dergleichen mit Hydraulikfluid bzw. Öl beaufschlagt bzw. versorgt. Um einen unerwünschten Austritt von Öl aus den Kammern in Richtung der Umgebung der Kammern, die einen ölfreien Bereich des Strahltriebwerkes darstellt, zu vermeiden, sind diese über geeignete Dichteinrichtungen gegenüber der Umgebung abgedichtet. Zusätzlich wird der Umgebungsdruck der Kammern im Betrieb eines Strahltriebwerkes jeweils auf ein höheres Druckniveau als der jeweilige Druck im Inneren der Kammern eingestellt. Dadurch wird auf einfache und sichere Weise zusätzlich einem unerwünschten Ölaustritt aus den Kammern entgegengetreten. Konstruktionsbedingt führt der höhere Umgebungsdruck dazu, dass sich jeweils ein reiner Luftstrom aus der Umgebung in die Lagerkammern hinein einstellt. Um einen daraus resultierenden unerwünschten Druckanstieg in den Kammern zu vermeiden, weisen die Kammern jeweils wenigstens einen Luftauslass auf, über den die einströmende Luft wieder ausgeleitet wird.

Da sich die in die Kammern einströmende reine Luft in den Kammern im Betrieb des Strahltriebwerkes mit Öl anreichert, strömt über die Luftauslässe nicht nur Luft, sondern auch Öl aus den Kammern ab. Deshalb ist der Ölanteil der aus den Kammern über die Luftauslässe abströmenden Fluidvolumenströme vor dem Ausleiten in Richtung der Umgebung des Strahltriebwerkes durch entsprechende Maßnahmen auf ein Minimum zu reduzieren.

Hierfür werden die Luft-Öl-Gemische aus den Kammern zunächst einem Ölabscheider bzw. einem sogenannten Breather zugeführt, in dessen Bereich Öl im erforderlichen Umfang aus den Luft-Öl-Gemischen abgeschieden wird. Das im Bereich des Ölabscheiders abgeschiedene Öl wird wieder dem Ölkreislauf zugeführt, wohingegen die gereinigte Luft über Bord an die Umwelt abgegeben wird.

Zusätzlich sind die Kammern auch mit jeweils wenigstens einem Ölauslass ausgeführt, über die jeweils nicht über die Luftauslässe ausströmendes Öl aus den Kammern in Richtung des Ölkreislaufes ausgeleitet wird. Üblicherweise sind die Ölauslässe in Einbaulage des Strahltriebwerkes in einem unteren Bereich der Lagerkammern angeordnet, so dass im Bereich der Lagerkammerwände abgeschiedenes Öl ohne zusätzliche Maßnahmen schwerkraftbedingt in Richtung der Ölauslässe abfließt, sich dort sammelt und in definiertem Umfang über eine Ölpumpe abgesaugt werden kann. Auch in geringem Umfang zerstäubtes Öl, das nicht mit der Luft in Richtung des Luftauslasses strömt, sammelt sich in diesem Bereich und gelangt über den Ölauslass aus der Kammer. Damit ist im Betrieb in den Lagerkammern jeweils ein zur Aufrechterhaltung der Funktionsweise der Lagereinrichtungen erforderlicher Ölvolumenstrom durch die Lagerkammern einstellbar.

Bei dem bekannten Strahltriebwerk wird konstruktionsbedingt ein großer Teil der in die Lagerkammern jeweils eingeleiteten Ölmenge mit Luft vermischt und von den Lagerkammern in Richtung des Ölabscheiders geführt. Dies bedingt eine entsprechend hohe Abscheideleistung des Ölabscheiders, die jedoch einen Wirkungsgrad des Strahltriebwerks in unerwünschtem Umfang beeinträchtigt.

Aus der DE 10 2013 106 877 A1 ist ein Strahltriebwerk mit wenigstens einem Ölabscheider beschrieben, durch den ein Luft-Öl-Volumenstrom aus wenigstens einem mit Öl beaufschlagten Bereich zum Abscheiden von Öl führbar ist. Der Luft-Öl-Volumenstrom aus dem mit Öl beaufschlagten Bereich ist über einen Innenraum eines Gehäuses einer Nebenaggregategetriebeeinrichtung in den Ölabscheider einleitbar. Die Luft ist über einen Luftauslass und das Öl ist über einen Ölauslass aus dem Ölabscheider abführbar. Im Innenraum des Ölabscheiders ist ein poröser Bereich drehbar angeordnet, der von dem aus dem Innenraum des Gehäuses der Nebenaggregategetriebeeinrichtung ausströmenden Luft-Öl-Volumenstrom durchströmbar ist.

Aus der US 2014/0155213 A1 ist eine Getriebeeinrichtung bekannt, in der drehbare Zahnräder angeordnet sind. Die Getriebeeinrichtung ist von einem Gehäuse umgeben. Das Gehäuse weist einen Ölrücklauftrichter auf, durch den Öl aus dem Gehäuse ausleitbar ist.

Aus der US 2009/0250296 A1 ist ein Schmier- und Rücklaufsystem bekannt, bei dem über mehrere Zuführkanäle, um Öl zu einer oder mehrere Sammelkammern benachbart zu einem Rollenlagerelement zurückzuführen. Ein rotierender Impeller in der Kammer zwingt Öl in einen Rücklaufableitkanal in der Kammerwand, der zu einer Rücklaufpumpe führt.

Aus der DE 103 30 829 B4 ist eine Lageranordnung für eine Gasturbine bekannt, bei der einem außenliegenden, feststehenden Lagerring zwei öldurchlässige Elemente zugeordnet sind. Die öldurchlässigen Elemente weisen einen im Wesentlichen L-förmigen Querschnitt auf. Ein Schenkel der öldurchlässigen Elemente erstreckt sich in axialer Richtung und ist fest mit dem feststehenden, äußeren Lagerring verbunden. Alternativ kann der in axialer Richtung verlaufende Schenkel auch am äußeren Lagerring anliegen und am Stator befestigt sein. An die Schenkel schließen sich radial verlaufende Schenkel der öldurchlässigen Elemente an. Die Schenkel erstrecken sich in radialer Richtung. Die öldurchlässigen Elemente sind feststehend und umschließen den äußeren, feststehenden Lagerring, die Wälzkörper sowie den innenliegenden, rotierenden Lagerring der Lageranordnung zumindest abschnittsweise bzw. bereichsweise. Hierdurch ist gewährleistet, dass das die Wälzkörper zur Schmierung und Kühlung umströmende Öl nach der Umströmung der Wälzkörper auf eine Innenseite der öldurchlässigen Elemente gelangt. Das Öl sammelt sich zunächst auf der Innenseite der öldurchlässigen Elemente und durchdringt danach dieselben. Nach dem Durchdringen der öldurchlässigen Elemente sammelt sich das Öl auf einer Außenseite derselben und ist auf der Außenseite der öldurchlässigen Elemente als Ölstrom gezielt und geordnet abführbar. Mithilfe der öldurchlässigen Elemente soll vermieden werden, dass das die Wälzlager umströmende Öl im gesamten Lagerraum verspritzt, vernebelt bzw. verschäumt wird. Vielmehr soll das Öl von den öldurchlässigen Elementen aufgefangen und zu einem Ölfilm bzw. Ölstrom gebündelt werden, der geordnet abgeführt werden kann. Mithilfe der Lageranordnung soll die Verweilzeit bzw. die Residenzzeit des Öls im Bereich der Lager verkürzt werden.

Durch die geringere Verweilzeit des Öls im Lager wird weiterhin weniger Wärme an das Öl übertragen. Demnach können in einer Gasturbine kleinere Ölkühler eingesetzt und damit das Gewicht der Gasturbine reduziert werden. Durch die verringerte Wärmeabgabe an das Öl wird auch die Verkokungsgefahr sowie die Feuergefahr an der Gasturbine reduziert.

Nachteilhafterweise führt jedoch die vorgeschlagene Abschirmung des Lagers dazu, dass den Lagerraum begrenzende Gehäusewände nicht mit Öl beaufschlagt und durch dieses temperierbar sind. Dies führt während ungünstiger Betriebszustandsverläufe der Gasturbine gegebenenfalls zu einem Anstieg der Betriebstemperatur der Gehäusewände auf Temperaturwerte, zu den auf den Gehäusewänden angeordnetes Öl in unerwünschtem Umfang verkokt und als Ablagerung zurückbleibt.

Um das Verkoken von Öl an den Gehäusewänden zu vermeiden, besteht die Möglichkeit, die Gehäusewände beispielsweise durch eine geeignete zusätzliche Ölkühlung und/oder Luftkühlung bedarfsgerecht zu temperieren. Problematisch dabei ist jedoch, dass aus einer zusätzlichen Ölkühlung, bei der Gehäusewände mit einem Ölvolumenstrom im Lagerinnenraum beaufschlagt werden, wiederum ein höheres Ölvolumen im Bereich des Lagers resultiert, was den Wirkungsgrad der Gasturbine beeinträchtigt. Eine zusätzliche Ölkühlung der Gehäusewände von Außen ist ebenfalls nicht erwünscht, da hierfür sowohl für die Führung des Kühlöls als auch für die Abdichtung des ölführenden Bereiches ein zusätzlicher die Herstellkosten einer Gasturbine treibender konstruktiver Aufwand erforderlich ist. Auch eine zusätzliche Luftkühlung verursacht einen unerwünschten zusätzlichen konstruktiven Aufwand sowie Leckagen, wobei aus den dafür vorzusehenden baulichen Maßnahmen letztendlich eine nicht zu vernachlässigenden Erhöhung des Gesamtgewichts eines Strahltriebwerkes resultiert.

Es ist Aufgabe der vorliegenden Erfindung, ein mit hohem Wirkungsgrad betreibbares kostengünstiges Strahltriebwerk zur Verfügung zu stellen, das im Betrieb einen geringen Ölverlust aufweist und bei dem die Verkokung von Hydraulikfluid über den gesamten Betriebsbereich vermieden wird.

Erfindungsgemäß wird diese Aufgabe mit einem Strahltriebwerk mit den Merkmalen des Patentanspruches 1 gelöst.

Das erfindungsgemäße Strahltriebwerk ist mit einer von einem Gehäuse begrenzten Kammer ausgeführt, in der eine drehbare und mit Hydraulikfluid bzw. Öl beaufschlagbare Einrichtung angeordnet ist, wobei durch das Gehäuse in die Kammer eingeleitetes Hydraulikfluid und Luft aus der Kammer ausführbar ist.

Erfindungsgemäß ist das Gehäuse in dem Bereich, durch den Luft und Hydraulikfluid aus der Kammer ausführbar ist, mit einer Abscheideeinrichtung ausgebildet, in deren Bereich Luft und Hydraulikfluid voneinander separierbar sind.

Bei dem erfindungsgemäß ausgeführten Strahltriebwerk wird im Betrieb das zur Schmierung der drehenden Einrichtung vorgesehene Hydraulikfluid bzw. Öl von der drehenden Einrichtung mit hohem Impuls in Richtung einer Innenwand des die Kammer begrenzenden Gehäuses abgeschleudert. In Abhängigkeit der jeweils vorgesehenen Ausführung des erfindungsgemäßen Strahltriebwerks trifft das abgeschleuderte Hydraulikfluid direkt auf die Innenseite des Gehäuses oder auf die Abscheideeinrichtung. Dabei wird die Innenwand des Gehäuses durch das von der drehenden Einrichtung abgeschleuderte und direkt auftreffende Hydraulikfluid im erforderlichen Umfang gekühlt. Aufgrund des großen Impulses lösen sich wieder Teile des die Innenwand des Gehäuses benetzenden Hydraulikfluids von der Innenwand des Gehäuses, prallen mit kleinerem Tropfendurchmesser vom Gehäuse ab und bilden mit der in der Kammer vorhandenen Luft ein Luft-Öl-Gemisch aus. Des Weiteren geht flüssiges Hydraulikfluid in Abhängigkeit des vorliegenden Betriebszustandes in der Kammer in den gasförmigen Aggregatszustand über, womit das in der Kammer entstehende Luft-Öl-Gemisch neben fein dispergierten Öltröpfchen auch gasförmiges Öl mitführt.

Die Ölbeladung des aus der Kammer in die Abscheideeinrichtung eingeleiteten Luft-Öl-Volumenstromes wird während der Durchströmung der Abscheideeinrichtung reduziert, wobei das im Bereich der Abscheideeinrichtung abgeschiedene Öl in gewünschtem Umfang in den Ölkreislauf zurückgeleitet wird. Der im Bereich der Abscheideeinrichtung vorgereinigte Luft-Öl-Volumenstrom wird mit einer im Vergleich zu dem aus dem Inneren der Kammer in die Abscheideeinrichtung einströmenden Luft-Öl-Volumenstrom geringeren Ölbeladung in Richtung eines sogenannten Breathers weitergeleitet. Im Bereich des Breathers wird die Ölbeladung des diesem zugeleiteten Luft-Öl-Volumenstroms auf ein gewünschtes Niveau abgesenkt, bevor der Luftstrom mit geringer Ölbeladung an die Umgebung des Strahltriebwerkes abgegeben wird.

Ist das Strahltriebwerk mit einer Umlenkeinrichtung ausgebildet, wird der von der drehenden Einrichtung abgeschleuderte Hydraulikfluidvolumenstrom, der direkt auf die Umlenkeinrichtung trifft und dort entsprechend umgelenkt wird, aufgrund der im Vergleich zur mitströmenden Luft höheren Dichte aus dem Luft-Öl-Gemisch zumindest teilweise abgetrennt und ein im Vergleich zu aus dem Stand der Technik bekannten Lösungen eine geringere Ölbeladung aufweisender Luft-Öl-Volumenstrom aus der Kammer ausgeleitet.

Ist das Strahltriebwerk sowohl mit der Umlenkeinrichtung als auch mit der Abscheideeinrichtung ausgebildet, findet die vorbeschriebene Abscheidung von Öl vor dem Austritt eines Luft-Öl-Volumenstromes aus der Kammer zunächst im Bereich der Umlenkeinrichtung und anschließend zusätzlich auch im Bereich der Abscheideeinrichtung statt.

Dabei strömt der im Bereich der Umlenkeinrichtung umgelenkte Luft-Öl-Volumenstrom in Richtung der Abscheideeinrichtung und trifft dort auf diese vor dem Austritt auf der Kammer mit hohem Impuls auf. Damit wird der dem Hydraulikfluid und der Luft unter anderem von der drehbaren Einrichtung aufgeprägte hohe Impuls trotz der Umlenkeinrichtung zur weiteren Abscheidung von Öl im Bereich der Abscheideeinrichtung auf konstruktiv einfache Art und Weise genutzt.

In Abhängigkeit des jeweils vorliegenden Anwendungsfalles besteht auch die Möglichkeit, dass dem Hydraulikfluid und der Luft in der Kammer aufgrund eines konstruktionsbedingten Druckgefälles zwischen dem bedruckten Innenraum der Kammer und dem außerhalb der Kammer liegenden Bereich des Luftauslasses nicht alleine von den innerhalb der Kammer angeordneten und im Betrieb rotierenden Bauteilen der Impuls aufgeprägt wird.

Unabhängig von der jeweiligen Ausführung des Strahltriebwerkes mit der Abscheideeinrichtung oder mit der Umlenkeinrichtung oder mit einer Kombination aus Abscheideeinrichtung und Umlenkeinrichtung wird dem Ölabscheider im Vergleich zu bekannten Lösungen ein Luft-Öl-Volumenstrom mit kleinerer Ölbeladung zugeführt. Aufgrund der geringen Ölbeladung des in Richtung des Ölabscheiders aus der Kammer abströmenden Luft-Öl-Gemisches ist der Ölabscheider mit geringer Abscheideleistung auslegbar und das erfindungsgemäße Strahltriebwerk mit hohem Wirkungsgrad betreibbar. Des Weiteren resultiert aus der im Bereich der Kammer erfindungsgemäßen teilweisen Vorreinigung der aus der Kammer austretenden Luft insgesamt im Betrieb auch ein geringerer Ölverbrauch eines erfindungsgemäß ausgeführten Strahltriebwerks. Der geringere Ölverbrauch eines Strahltriebwerks ermöglicht wiederum einen Öltank des Strahltriebwerks kleiner auszulegen, was sich positiv auf das Gesamtgewicht eines Strahltriebwerkes auswirkt.

Des Weiteren wird das direkte Beaufschlagen der Innenwand des Gehäuses mit Hydraulikfluid ausgehend von der drehbaren Einrichtung das Gehäuse in gewünschtem Umfang gekühlt und ein Verkoken von Hydraulikfluid selbst während ungünstiger Betriebszustandsverläufe des erfindungsgemäßen Strahltriebwerks auf einfache Art und Weise ohne zusätzliche Kühlmaßnahmen vermieden.

Die Abscheideeinrichtung kann als Koaleszenz-Abscheideeinrichtung ausgeführt sein, bei der eine Abscheidung von Luft und Öl auf einer großen Oberfläche im Bereich der Abscheideeinrichtung basiert.

Bei einer konstruktiv einfach umsetzbaren Ausführungsform des erfindungsgemäßen Strahltriebwerks ist die Abscheideeinrichtung mit einer Gitterstruktur und/oder mit einer Zellstruktur ausgeführt. Alternativ oder zusätzlich hierzu kann es auch vorgesehen sein, dass die Abscheideeinrichtung mit einem schaumartigen oder schwammartigen Element ausgeführt ist.

Die Abscheideeinrichtung ist bei einer weiteren einfach herstellbaren und durch einen geringen Montageaufwand gekennzeichneten Ausführungsform des erfindungsgemäßen Strahltriebwerkes integral mit dem Gehäuse ausgebildet. Dabei besteht die Möglichkeit, das Gehäuse gemeinsam mit der Abscheideeinrichtung und/oder der Umlenkeinrichtung mittels eines additiven Herstellungsverfahrens, insbesondere mittels einer 3D-Drucks, herzustellen. Bei einer solchen Ausführungsform des erfindungsgemäßen Strahltriebwerks stellen die Abscheideeinrichtung und/oder die Umlenkeinrichtung einen integralen Teil des Gehäuses dar, so dass die Abscheideeinrichtung und/oder die Umlenkeinrichtung strukturelle Aufgaben des Gehäuses übernehmen und lasttragend sind.

Alternativ hierzu kann es auch vorgesehen sein, dass die Abscheideeinrichtung und/oder die Umlenkeinrichtung im Bereich des Gehäuses beispielsweise mittels eines Schweiß- oder Klebeverfahrens und vorzugsweise in einer Aussparung des Gehäuses am Gehäuse angebunden sind.

Bei einer mit geringem Aufwand betreibbaren Ausführungsform des erfindungsgemäßen Strahltriebwerks ist eine Pumpeneinrichtung zur Absaugung von Hydraulikfluid aus der Kammer durch den Bereich des Gehäuses vorgesehen. Damit wird auf einfache Art und Weise erreicht und gewährleistet, dass in der Kammer ein definiertes Ölvolumen nicht überschritten wird.

Das Gehäuse weist bei einer weiteren vorteilhaften Ausführungsform des erfindungsgemäßen Strahltriebwerks mehrere Bereiche auf, wobei jedem Bereich jeweils wenigstens eine Abscheideeinrichtung zugeordnet ist.

Die Bereiche sind dabei jeweils insbesondere in Abschnitten des Gehäuses angeordnet, die im Betrieb des Strahltriebwerks von der drehbaren Einrichtung hauptsächlich mit Hydraulikfluid und/oder einem Luft-Öl-Volumenstrom beaufschlagt werden. Dabei besteht auch die Möglichkeit, dass das Gehäuse umfangsseitig verteilt eine Vielzahl von Bereichen aufweist, durch welche Luft und Hydraulikfluid aus der Kammer ausführbar sind. Insbesondere bei einer großen Anzahl von Abscheideeinrichtungen, die beispielsweise integral mit dem Gehäuse ausgebildet sind, wirken die Bereiche als Flammensperre und einer Geräuschausbreitung entgegen. Des Weiteren stellen die Bereiche eine hohe Stabilität bei gleichzeitig geringem Gewicht zur Verfügung.

Ist die Kammer als eine Lagerkammer des Strahltriebwerks ausgebildet und die drehbare Einrichtung eine Lagereinrichtung, ist eine gewünschte Versorgung des Lagers mit Hydraulikfluid gewährleistbar, ohne dabei eine Verkokung im Bereich der Lagerkammerwand zu verursachen und eine Umwelt des Strahltriebwerks in unerwünschtem Umfang mit Hydraulikfluid zu belasten.

Bei einer weiteren Ausführungsform des erfindungsgemäßen Strahltriebwerks ist die Kammer von einem zumindest einen Teil einer Getriebeeinrichtung umgebenden Gehäuse gebildet, wobei die Getriebeeinrichtung als Planetengetriebe ausgeführt ist.

Die drehende Einrichtung kann neben einer Lagereinrichtung auch ein Zahnrad einer Getriebeeinrichtung, eine Welle oder dergleichen sein.

Weitere Vorteile und vorteilhafte Ausführungsformen des erfindungsgemäßen Strahltriebwerks ergeben sich aus den Patentansprüchen und dem nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
- Fig. 1: eine vereinfachte Schnittdarstellung eines Strahltriebwerks mit einem Bläser und mit einer Niederdruckturbine, wobei der Bläser über eine Planetengetriebevorrichtung mit der Niederdruckturbine in Wirkverbindung steht;
- Fig. 2: eine stark schematisierte Teildarstellung des Strahltriebwerks gemäß Fig. 1 mit einem im Bereich einer Nebenaggregategetriebeeinrichtung angeordneten Ölabscheider;
- Fig. 3: eine stark vereinfachte Querschnittsdarstellung einer ersten Ausführungsform einer Kammer des Strahltriebwerks gemäß Fig. 1; und
- Fig. 4: eine stark vereinfachte Querschnittsdarstellung einer zweiten Ausführungsform einer Kammer des Strahltriebwerks gemäß Fig. 1.

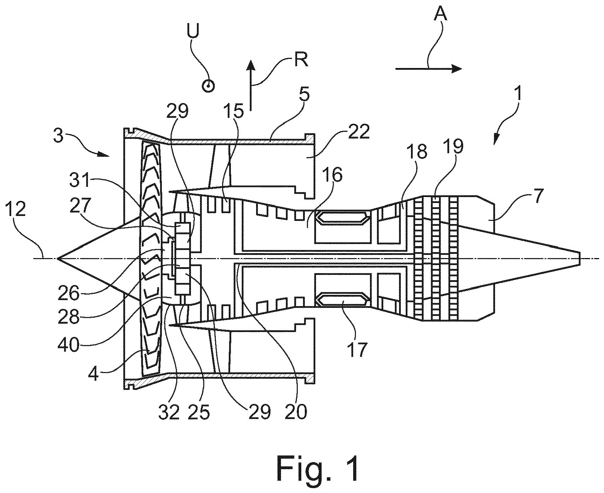

In Fig. 1 ist ein Strahltriebwerk 1 bzw. Gasturbinentriebwerk gezeigt, das eine Haupt- und Drehachse 12 aufweist. Des Weiteren umfasst das Strahltriebwerk 1 in axialer Strömungsrichtung A einen Lufteinlass 3, einen Bläser 4, eine Planetenge-triebevorrichtung 25, einen Zwischendruckverdichter 15, einen Hochdruckverdichter 16, eine Verbrennungseinrichtung 17, eine Hochdruckturbine 18, eine Niederdruckturbine 19 und eine Ausströmdüse 7. Eine Triebwerksgondel 5 umgibt das Gasturbinentriebwerk 1 und begrenzt den Einlass 3.

Das Strahltriebwerk 1 arbeitet in herkömmlicher Weise, wobei in den Einlass 3 eintretende Luft durch den Bläser 4 beschleunigt wird, um zwei Luftströme zu erzeugen. Ein erster Luftstrom strömt in den Zwischendruckverdichter 15 und ein zweiter Luftstrom wird durch einen Bypasskanal 22 bzw. Nebenstromkanal geführt, um einen Antriebsschub bereitzustellen. Der Zwischendruckverdichter 15 komprimiert den ihm zugeführten Luftstrom, bevor die Luft im Bereich des Hochdruckverdichters 16 weiter verdichtet wird.

Die aus dem Hochdruckverdichter 16 ausströmende Druckluft wird in die Verbrennungseinrichtung 17 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 18 und die Niederdruckturbine 19 an, bevor sie über die Ausströmdüse 7 ausgeführt werden, um einen zusätzlichen Antriebsschub bereitzustellen. Die Hochdruckturbine 18 und die Niederdruckturbine 19 treiben den Hochdruckverdichter 16 bzw. den Zwischendruckverdichter 15 jeweils über eine geeignete Verbindungswelle 20, 21 an. Die die Niederdruckturbine 19 mit dem Zwischendruckverdichter 15 koppelnde Niederdruckwelle 20 treibt auch den Bläser 4 über die Planetengetriebevorrichtung 25 an.

Die Niederdruckwelle 20 ist hier mit einem Sonnenrad 28 der Planetengetriebevorrichtung 25 verbunden, wohingegen der Bläser 4 im Bereich einer Bläserwelle 26 mit einem umlaufenden Planetenträger 27 der Planetengetriebevorrichtung 25 in Wirkverbindung steht. Der Planetenträger 27 wirkt dabei über nicht näher ersichtliche Lagereinrichtungen mit mehreren, umfangsseitig verteilt angeordneten Planetenrädern 29 der Planetengetriebevorrichtung 25 zusammen. Bei der gezeigten Ausführung der Planetengetriebevorrichtung 25 ist ein Hohlrad 31 der Planetengetriebevorrichtung 25 gehäusefest an einer Gehäuseeinrichtung 32 angeordnet. Bei hierzu alternativen Ausführungen der Getriebevorrichtung kann auch der Planetenträger oder das Sonnenrad gehäusefest ausgeführt sein.

Mit der gezeigten Ankopplung der Bläserwelle 26 und der Niederdruckwelle 20 der Niederdruckturbine 19 an die Planetengetriebevorrichtung 25 wird ein über die Niederdruckwelle 20 an der Planetengetriebevorrichtung 25 anliegendes Antriebsmoment der Standübersetzung der Planetengetriebevorrichtung 25 entsprechend angehoben und der Bläserwelle 26 zugeführt, während die Drehzahl der Niederdruckwelle 20 um den Faktor der Standübersetzung der Planetengetriebevorrichtung 25 größer ist als die Drehzahl der Bläserwelle 26. Wenn der Bläser 4 von der Niederdruckturbine 19 angetrieben wird, wird die Drehzahl der Niederdruckwelle 20 der Übersetzung der Planetengetriebevorrichtung 25 im Bereich der Planetengetriebevorrichtung 25 entsprechend reduziert und die Bläserwelle 26 sowie der Bläser 4 mit dieser reduzierten Drehzahl und mit einem gegenüber dem an der Niederdruckwelle 20 anliegenden Drehmoment erhöhten Drehmoment angetrieben.

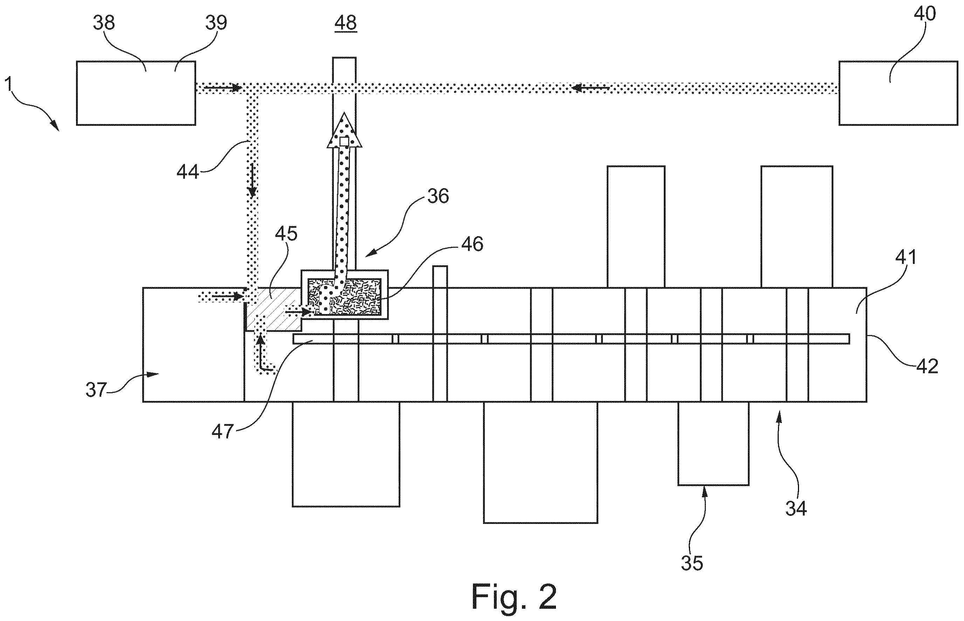

In Fig. 2 ist eine Nebenaggregategetriebeeinrichtung 34 näher ersichtlich, in deren Bereich eine Hydraulikpumpe angeordnet ist. Mittels der Hydraulikpumpe sind im Betrieb des Strahltriebwerks 1 unter anderem Lagereinrichtungen und Zahnradpaarungen der Planetengetriebevorrichtung 25 zur Kühlung und Schmierung mit Hydraulikfluid versorgbar.

Von der Nebenaggregategetriebeeinrichtung 34 werden verschiedene Nebenaggregate 35 und ein Ölabscheider 36, der auch als Breather bezeichnet wird, in gewünschtem Umfang mit Drehmoment beaufschlagt. Zusätzlich ist im Bereich der Nebenaggregategetriebeeinrichtung 34 auch ein Öltank 37 vorgesehen, der ein Hydraulikfluidreservoir darstellt, aus dem Öl zur Kühlung und Schmierung verschiedener Bereiche des Strahltriebwerks 1, wie Lagereinrichtungen zur Lagerung der Niederdruckwelle 20 und der Hochdruckwelle 21, Zahnradpaarungen der Nebenaggregategetriebeeinrichtung 34, die Planetengetriebevorrichtung 25 sowie weitere zu kühlende und zu schmierende Baugruppen des Strahltriebwerks 1, entnommen wird.

Der Ölabscheider 36 steht vorliegend mit dem Öltank 37, einer vorderen Lagerkammer 38, einer hinteren Lagerkammer 39, einem eine Kammer 40 bildenden Innenraum der Planetengetriebevorrichtung 25 sowie einem Innenraum 41 eines Gehäuses 42 der Nebenaggregategetriebeeinrichtung 34 in Verbindung, die alle mit Öl beaufschlagte Bereiche des Strahltriebwerks 1 darstellen. In den Lagerkammern 38, 39 angeordnete Lagereinrichtungen und Zahneingriffe bzw. Lagerungen der Planetengetriebevorrichtung 25 werden im Betrieb des Strahltriebwerks 1 mit Öl aus dem Öltank 37 zum Schmieren und Kühlen beaufschlagt.

Bei der Ausführungsform gemäß Fig. 2 ist jeweils ein Luft-Öl-Volumenstrom aus den Lagerkammern 38, 39 und der Kammer 40 über einen Leitungsbereich 44 führbar, der vorliegend in eine dem Ölabscheider 36 vorgeschaltete Vorkammer 45 mündet. Die Vorkammer 45 ist mit dem Ölabscheider 36 verbunden, in dessen Innenraum ein poröser Bereich 46 drehbar angeordnet ist, der von dem aus der Vorkammer 45 ausströmenden Luft-Öl-Volumenstrom durchströmbar ist.

Der poröse Bereich 46 ist vorliegend über ein Zahnrad 47 von der Nebenaggregategetriebeeinrichtung 34 antreibbar und wirkt als Zentrifuge, um den Anteil an Öl des durch den porösen Bereich 46 strömenden Luft-Öl-Volumenstroms soweit als möglich reduzieren zu können. Dabei wird der Ölanteil des Luft-Öl-Volumenstroms im Ölabscheider 36 im Bereich des porösen Bereichs 46 einerseits wie beim Durchströmen eines Prallfilters und andererseits wie im Bereich einer Zentrifuge durch die Rotation des porösen Bereichs 46 durch Abscheiden des Öls aus der Luft reduziert. Das im Bereich des porösen Bereichs 46 aus dem Luft-Öl-Volumenstrom ausgefilterte Öl wird im äußeren Bereich des Ölabscheiders 36 in nicht näher dargestellter Art und Weise über eine Pumpeneinrichtung abgesaugt und zurück in den Öltank 37 geführt. Der aus dem Ölabscheider 36 in Richtung der Umgebung 48 ausströmende Luftstrom weist eine sehr geringe Beladung an Öl auf.

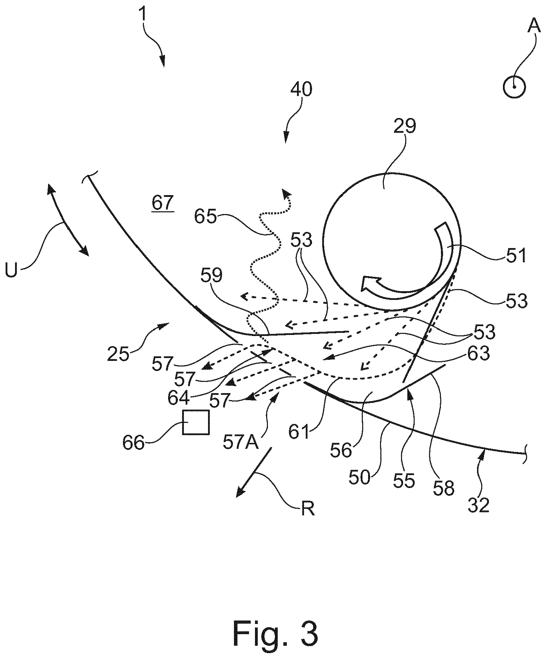

In Fig. 3 ist ein Ausschnitt einer ersten Ausführungsform der einen Innenraum 67 aufweisenden Kammer 40 der Planetengetriebevorrichtung 25 gezeigt, wobei die Kammer 40 in einem in radialer Richtung R äußeren Bereich von einem feststehenden Wandungsbereich 50 der feststehenden Gehäuseeinrichtung 32 begrenzt ist. In radialer Richtung R innerhalb der Kammer 40 ist schematisch eine im Betrieb des Strahltriebwerks 1 relativ zu der Gehäuseeinrichtung drehende Einrichtung 28, 29, 31, insbesondere ein Planetenrad 29 der Planetengetriebevorrichtung 25, angeordnet. Das Planetenrad 29 dreht sich im Betrieb mit großer Drehzahl in der Drehrichtung 51, wobei das dem Planetenrad 29 zum Kühlen und Schmieren zugeführte Öl im Wesentlichen tangential vom Planetenrad 29 abgeschleudert wird und mit großem Impuls im Wesentlichen in radialer Richtung R des Strahltriebwerks 1 von dem Planetenrad 29 in der durch die Pfeile 53 angegebenen Art und Weise in Richtung des Wandungsbereichs 50 strömt.

Der Wandungsbereich 50 weist eine Umlenkeinrichtung 55 auf, die einen Kanal 56 zur Führung des abgeschleuderten Öls bzw. eines Luft-Öl-Gemischs in Richtung von in dem Wandungsbereich 50 angeordneten Auslassöffnungen 57 eines Bereiches 57A der Gehäuseeinrichtung bzw. des Gehäuses 32 umfasst. Die mit dem Wandungsbereich 50 verbundene Umlenkeinrichtung 55 hat vorliegend zwei Umlenkelemente 58, 59, die den Kanal 56 in Umfangsrichtung U begrenzen. Die Umlenkelemente 58, 59 sind derart in radialer Richtung R und in Umfangsrichtung U gebogen ausgeführt, dass die Strömungsrichtung 53 von in den Kanal 56 einströmendem Luft-Öl-Gemisch in Bezug auf den Wandungsbereich 50 zumindest teilweise durch das erste Umlenkelement 58 in eine im Wesentlichen tangentiale Strömungsrichtung 61 im Bereich der Auslassöffnungen 57 umgelenkt wird.

Durch diese Umlenkung des Luft-Öl-Gemischs um beispielsweise etwa 90° scheidet sich das eine höhere Dichte als die Luft aufweisende Öl des Luft-Öl-Gemischs am ersten Umlenkelement 58 bzw. am Wandungsbereich 50 ab und bildet dort einen Ölfilm, der in Richtung der Auslassöffnungen 57 strömt.

Das erste Umlenkelement 58 ist dabei derart gebogen und mit einem insbesondere derart großen Radius ausgeführt, dass bei einem Auftreffen des von dem Planetenrad 29 abgeschleuderten Öls bzw. des Öls des Luft-Öl-Gemischs auf dem ersten Umlenkelement 58 das Öl am Umlenkelement 58 haften bleibt und sich nicht wieder löst und nicht in Form von dispergierten kleinen Öltropfen zurückgeschleudert wird. Dies ist von Vorteil, da kleine Öltropfen schwerer aus einem Luft-Öl-Gemisch abscheidbar sind als Öltropfen mit größeren Durchmessern.

Das im Bereich der Umlenkeinrichtung 55 abgeschiedene Öl und das verbleibende Luft-Öl-Gemisch werden mit weiterhin großem Impuls in im Wesentlichen tangentialer Richtung zu dem statischen bzw. feststehenden und im Betrieb des Strahltriebwerks 1 sich nicht drehenden Wandungsbereich 50 zu einer Abscheideeinrichtung 63 geführt. Die Abscheideeinrichtung 63 ist im Bereich 57A bzw. im Bereich der Auslassöffnungen 57 auf einer einem Innenraum 67 der Kammer 40 zugewandten Seite fest mit dem Wandungsbereich 50 verbunden. Des Weiteren ist die Abscheideeinrichtung 63 vorliegend mit einer Gitterstruktur 64 bzw. mit einer schaumartigen Struktur mit einer großen Oberfläche ausgeführt. Das Luft-Öl-Gemisch strömt durch die Gitterstruktur 64, womit ein weiterer Teil des vom Luft-Öl-Gemisch mitgeführten Öls im Bereich der als Koaleszenzfilter wirkenden Gitterstruktur 64 aus dem Luft-Öl-Gemisch abgeschieden wird. Anschließend strömt Luft bzw. ein Luft-Öl-Gemisch mit einem geringen Ölanteil in die durch den Pfeil 65 gekennzeichnete Richtung aus dem Kanal 56 ab und verbleibt in der Kammer 40.

Auf einer der Kammer 40 abgewandten Seite der Auslassöffnungen 57 ist eine lediglich schematisch dargestellte Pumpeneinrichtung 66 angeordnet, mittels der das im Bereich der Umlenkeinrichtung 55 abgeschiedene Öl und das im Bereich der Abscheideeinrichtung 63 abgeschiedene Öl aus der Kammer 40 abgeführt und dem Öltank 37 zugeführt wird.

Die Umlenkeinrichtung 55 und die Abscheideeinrichtung 63 sind vorliegend mittels eines additiven Herstellverfahrens integral mit dem Wandungsbereich 50 hergestellt, wobei der Wandungsbereich 50 insbesondere im Bereich der Abscheideeinrichtung 63 lasttragend sein kann und strukturelle Aufgaben übernehmen kann. Zudem weist der Wandungsbereich 50 im Bereich der Gitterstruktur 64 eine hohe Stabilität bei gleichzeitig geringem Gewicht auf. Wird die Gitterstruktur 64 beispielsweise mittels eines Laserauftragsverfahrens hergestellt, sind die Umlenkeinrichtung 55 und die Abscheideeinrichtung 63 mit hohen Freiheitsgraden gestaltbar.

Neben der gezeigten Ausführung können auch mehrere Umlenkeinrichtungen 55 und mehrere Abscheideeinrichtungen 63 vorgesehen sein, die umfangsseitig des Gehäuses 32 verteilt angeordnet sind. Des Weiteren besteht auch die Möglichkeit, dass eine im Wesentlichen komplett umlaufende Abscheideeinrichtung 63 vorgesehen ist. Dann stellt der Wandungsbereich 50 eine Flammensperre dar. Zudem wirkt eine derartige Ausführung des Wandungsbereichs 50 geräuschdämpfend, wodurch eine Geräuschausbreitung auf einfache Art und Weise reduzierbar ist.

Bei einer alternativen Ausführung der Erfindung kann auch ein Wandungsbereich der vorderen Lagerkammer 38 und/oder der hinteren Lagerkammer 39 vergleichbar zu dem Wandungsbereich 50 der Kammer 40 ausgeführt sein.

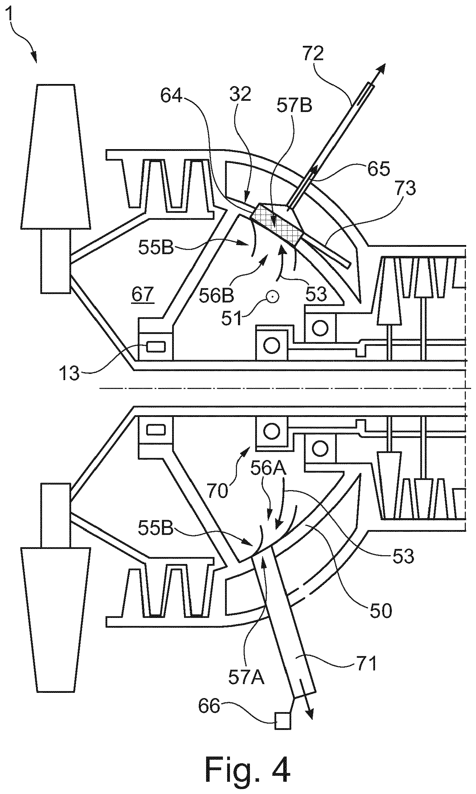

Fig. 4 zeigt eine weitere Ausführungsform der Kammer 40, deren Gehäuse 32 mit einem ersten Bereich 57A und mit einem zweiten Bereich 57B ausgebildet ist. Dabei ist der erste Bereich 57A in Einbaulage des Strahltriebwerks 1 in einem unteren Bereich der Kammer 40 vorgesehen, während der zweite Bereich 57B in einem oberen Bereich der Kammer 40 positioniert ist. Der erste Bereich 57A und der zweite Bereich umfassen jeweils eine Umlenkeinrichtung 55A bzw. 55B mit jeweils einem im vorbeschriebenen Umfang gekrümmt ausgeführten Kanal 56A bzw. 56B, die jeweils eine einem Spiralluftabscheider entsprechende Wirkungsweise aufweisen. Dabei entspricht die Krümmung der Kanäle 56A und 56B einer Hauptströmungsrichtung eines von einer Lagereinrichtung 70 in radialer Richtung der Kammer 40 abströmenden Luft-Öl-Gemisches.

Über den ersten Bereich 57A wird im Bereich der Umlenkeinrichtung 55A in dem zu Fig. 3 näher beschriebenen Umfang im Wesentlichen lediglich abgeschiedenes Öl aus der Kammer 40 ausgeleitet und über eine Ölrückführleitung 71 in den Ölkreislauf zurückgeführt, während die in den Kanal 56A einströmende Luft mit geringerer Ölbeladung aus dem Kanal 56A in den Innenraum der Kammer 40 zurückströmt.

Im Unterschied hierzu wird durch den zweiten Bereich 57B sowohl Öl als auch ein Luft-Öl-Gemisch aus der Kammer 40 ausgeleitet, wobei die Ölbeladung des durch den zweiten Bereich 57B aus der Kammer 40 ausströmenden Luft-Öl-Gemisches geringer ist als die Ölbeladung des aus der Kammer 40 in den Kanal 56B der Umlenkeinrichtung 55B einströmenden Luft-Öl-Gemisches. Dies resultiert aus der Tatsache, dass zunächst im Bereich der Umlenkeinrichtung 55B in dem zu Fig. 3 beschriebenen Umfang Öl aus dem Luft-Öl-Gemisch abgeschieden wird. Der zweite Bereich 57B ist zusätzlich auch mit einer Abscheideeinrichtung 63B ausgebildet, in deren Bereich die Ölbeladung des durch den Kanal 56B im Wesentlichen tangential zugeführten Luft-Öl-Gemisches weiter reduziert wird. Anschließend wird das im Bereich der Umlenkeinrichtung 55B und der Abscheideeinrichtung 63B vorgereinigte Luft-Öl-Gemisch über eine weitere Leitung 72 in Richtung des Breathers geführt, während das im Bereich der Umlenkeinrichtung 55B und der Abscheideeinrichtung 63B aus dem Luft-Öl-Gemisch abgeschiedene Öl über eine weitere Ölrückführleitung 73 in den Ölkreislauf zurückgeführt wird.

### Bezugszeichenliste

- 1: Strahltriebwerk
- 3: Lufteinlass
- 4: Bläser
- 5: Triebwerksgondel
- 7: Ausströmdüse
- 12: Drehachse
- 15: Zwischendruckverdichter
- 16: Hochdruckverdichter
- 17: Verbrennungseinrichtung
- 18: Hochdruckturbine
- 19: Niederdruckturbine
- 20: Niederdruckwelle
- 21: Hochdruckwelle
- 22: Bypasskanal
- 25: Getriebevorrichtung; Planetengetriebevorrichtung
- 26: Bläserwelle
- 27: Planetenträger
- 28: Sonnenrad
- 29: Planetenrad
- 31: Hohlrad
- 32: Gehäuseeinrichtung
- 34: Nebenaggregategetriebeeinrichtung
- 35: Nebenaggregate
- 36: Ölabscheider
- 37: Öltank
- 38: vordere Lagerkammer
- 39: hintere Lagerkammer
- 40: Kammer
- 41: Innenraum der Nebenaggregategetriebeeinrichtung
- 42: Gehäuse der Nebenaggregategetriebeeinrichtung
- 44: Leitungsbereich
- 45: Vorkammer
- 46: poröser Bereich des Ölabscheiders
- 47: Zahnrad
- 48: Umgebung
- 50: Wandungsbereich der Kammer
- 51: Drehrichtung
- 53: Strömungsrichtung
- 55, 55A, 55B: Umlenkeinrichtung
- 56, 56A, 56B: Kanal
- 57: Auslassöffnung
- 57A, 57B: Bereich
- 58: erstes Umlenkelement
- 59: zweites Umlenkelement
- 61: Strömungsrichtung
- 63, 63A: Abscheideeinrichtung
- 64: Gitterstruktur
- 65: Strömungsrichtung
- 66: Pumpeneinrichtung
- 67: Innenraum der Kammer
- 70: Lagereinrichtung
- 71: Ölrückführleitung
- 72: weitere Leitung
- 73: weitere Ölrückführleitung
- A: axiale Richtung des Strahltriebwerks
- R: radiale Richtung des Strahltriebwerks
- U: Umfangsrichtung des Strahltriebwerks

## Patentansprüche

1. Strahltriebwerk (1) mit einer von einem feststehenden Gehäuse (32) mit einem feststehenden Wandungsbereich (50) in radialer Richtung (R) begrenzten Kammer (38, 39, 40) einer Planetengetriebevorrichtung (25) oder einer Lagerkammer (38, 39), in der eine drehbare und mit Hydraulikfluid beaufschlagbare Einrichtung (29; 70) angeordnet ist, wobei durch das Gehäuse (32) in die Kammer (38, 39, 40) eingeleitetes Hydraulikfluid und Luft aus der Kammer (38, 39, 40) ausführbar ist, wobei das Gehäuse (32) in einem Bereich (57A; 57A, 57B), durch den Luft und Hydraulikfluid aus der Kammer (38, 39, 40) ausführbar ist, mit einer Abscheideeinrichtung (63; 63A) zum Abscheiden von Öl aus einem Luft-Öl-Gemisch ausgebildet ist, in deren Bereich Luft und Hydraulikfluid voneinander separierbar sind, wobei die Abscheideeinrichtung (63; 63A) mit einer Gitterstruktur (64) und/oder einer Zellstruktur ausgeführt ist, durch die das Luft-Öl-Gemisch zum Abscheiden von Öl aus dem Luft-Öl-Gemisch strömt, und auf einer einem Innenraum (67) der Kammer (38, 39 40) zugewandten Seite fest mit dem Wandungsbereich (50) verbunden ist.

2. Strahltriebwerk nach Anspruch 1, **dadurch gekennzeichnet, dass** die Abscheideeinrichtung (63; 63A) als Koaleszenz-Abscheideeinrichtung ausgeführt ist.

3. Strahltriebwerk nach einem der Ansprüche 1 oder 2, **dadurch gekennzeichnet, dass** die Abscheideeinrichtung (63; 63A) mit einem schaumartigen oder schwammartigen Element ausgeführt ist.

4. Strahltriebwerk nach einem der Ansprüche 1 bis 3, **dadurch gekennzeichnet, dass** die Abscheideeinrichtung (63; 63A) integral mit dem Gehäuse (32) ausgebildet ist.

5. Strahltriebwerk nach einem der Ansprüche 1 bis 4, **dadurch gekennzeichnet, dass** eine Pumpeneinrichtung (66) zur Absaugung von Hydraulikfluid aus der Kammer (38, 39, 40) durch den Bereich (57A; 57A, 57B) des Gehäuses (32) vorgesehen ist.

6. Strahltriebwerk nach einem der Ansprüche 1 bis 5, **dadurch gekennzeichnet, dass** das Gehäuse (32) mehrere Bereiche (57A, 57A, 57B) aufweist, wobei jedem Bereich (57A; 57A, 57B) jeweils wenigstens eine Abscheideeinrichtung (63; 63A) zugeordnet ist.

## Claims

1. Jet engine (1) having a chamber (38, 39, 40), which is delimited in a radial direction (R) by a fixed housing (32) with a fixed wall region (50), of a planetary gear box device (25), or a bearing chamber (38, 39), in which a rotatable device (29; 70) which can be impinged on with hydraulic fluid is arranged, wherein hydraulic fluid and air introduced into the chamber (38, 39, 40) through the housing (32) can be discharged from the chamber (38, 39, 40), wherein the housing (32) is, in a region (57A; 57A, 57B) through which air and hydraulic fluid can be discharged from the chamber (38, 39, 40), formed with a separating device (63; 63A) for separating oil from an air-oil mixture, in the region of which separating device air and hydraulic fluid can be separated from one another, wherein the separating device (63; 63A) is formed with a grille structure (64) and/or a cellular structure, through which the air-oil mixture flows for the separation of oil from the air-oil mixture, and, on a side facing towards an interior space (67) of the chamber (38, 39, 40), said separating device is fixedly connected to the wall region (50).

2. Jet engine according to Claim 1, **characterized in that** the separating device (63; 63A) is designed as a coalescence-type separating device.

3. Jet engine according to either of Claims 1 and 2, **characterized in that** the separating device (63; 63A) is formed with a foam-like or sponge-like element.

4. Jet engine according to any of Claims 1 to 3, **characterized in that** the separating device (63; 63A) is formed integrally with the housing (32).

5. Jet engine according to any of Claims 1 to 4, **characterized in that** a pump device (66) is provided for suctioning hydraulic fluid out of the chamber (38, 39, 40) through the region (57A; 57A, 57B) of the housing (32).

6. Jet engine according to any of Claims 1 to 5, **characterized in that** the housing (32) has multiple regions (57A; 57A, 57B), wherein each region (57A; 57A, 57B) is assigned in each case at least one separating device (63; 63A).

## Revendications

1. Moteur à réaction (1) muni d'une chambre (38, 39, 40), délimitée dans la direction radiale (R) par un boîtier fixe (32) ayant une zone de paroi fixe (50), d'un dispositif à engrenage planétaire (25) ou d'une chambre de stockage (38, 39), dans laquelle un appareil (29 ; 70) rotatif et pouvant être chargé avec un fluide hydraulique est agencé, du fluide hydraulique et de l'air introduits dans la chambre (38, 39, 40) au travers du boîtier (32) pouvant être déchargés de la chambre (38, 39, 40), le boîtier (32) étant configuré dans une zone (57A ; 57A, 57B), au travers de laquelle de l'air et du fluide hydraulique peuvent être déchargés de la chambre (38, 39, 40), avec un appareil de séparation (63 ; 63A) pour la séparation d'huile d'un mélange air-huile, dans la zone duquel de l'air et du fluide hydraulique peuvent être séparés l'un de l'autre, l'appareil de séparation (63 ; 63A) étant réalisé avec une structure de grille (64) et/ou une structure cellulaire, au travers de laquelle le mélange air-huile s'écoule pour la séparation d'huile du mélange air-huile, et étant relié sur un côté, tourné vers un espace intérieur (67) de la chambre (38, 39, 40), de manière fixe avec la zone de paroi (50).

2. Moteur à réaction selon la revendication 1, **caractérisé en ce que** l'appareil de séparation (63 ; 63A) est réalisé sous la forme d'un appareil de séparation à coalescence.

3. Moteur à réaction selon l'une quelconque des revendications 1 ou 2, **caractérisé en ce que** l'appareil de séparation (63 ; 63A) est réalisé avec un élément de type mousse ou de type éponge.

4. Moteur à réaction selon l'une quelconque des revendications 1 à 3, **caractérisé en ce que** l'appareil de séparation (63 ; 63A) est configuré d'un seul tenant avec le boîtier (32).

5. Moteur à réaction selon l'une quelconque des revendications 1 à 4, **caractérisé en ce qu'**un appareil de pompage (66) pour l'aspiration de fluide hydraulique de la chambre (38, 39, 40) est prévu au travers de la zone (57A ; 57A, 57B) du boîtier (32).

6. Moteur à réaction selon l'une quelconque des revendications 1 à 5, **caractérisé en ce que** le boîtier (32) comprend plusieurs zones (57A, 57A, 57B), respectivement au moins un appareil de séparation (63 ; 63A) étant attribué à chaque zone (57A ; 57A, 57B).
